# EUROPEAN PATENT APPLICATION

(11) **EP 2 846 297 A1**
(43) Date of publication of application: **11.03.2015**
(21) Application number: 14183520.7
(22) Date of filing: 04.09.2014
(51) Int. Cl.: G06Q 10/06, G06Q 10/10

(54) **Information processing terminal, transmission system, and recording medium**

(30) Priority: 06.09.2013 JP 2013185112
(71) Applicant: Ricoh Company, Ltd., Tokyo 143-8555 (JP)
(72) Inventor: Okuyama, Taro, Tokyo, 143-8555 (JP); Asai, Takahiro, Tokyo, 143-8555 (JP)
(74) Representative: Schwabe - Sandmair - Marx

(57) **Abstract**

An information processing terminal is disclosed, including a generation part and a transmission part. The generation part generates image data indicating a first image where address information of predetermined data is embedded in a second image being displayed at a display device. The transmission part transmits the image data generated by the generation part to have a destination for sharing the second image be a share of the image data.

## Description

### BACKGROUND OF THE INVENTION

### 1. Field of the Invention

The present invention is related to an information processing terminal, a transmission system, and a computer-readable recording medium.

### 2. Description of the Related Art

A transmission system has been known in which a screen of a Personal Computer (PC) is shared by connecting the PC or the like to a predetermined transmission terminal (for example, Patent Document 1). For instance, the transmission system may be used for a conference between remote locations.

In the transmission system, when the conference and or the like is conducted, it is desired to distribute materials for the conference beforehand. A material distribution method for a conference system, in which an e-mail address is embedded beforehand in the material used at the conference, has been conventionally known in order to automate distribution of conference materials (for example, Patent Document 2).

However, in the above-described material distribution method, it is required to comprehend who the participants are beforehand in order to distribute conference materials. For example, it is difficult to distribute the conference materials to a participant who is suddenly scheduled to attend the conference at the last moment of the day of the conference.

### [Patent Documents]

Patent Document 1 : Japanese Laid-Open Patent Application No. 2011-254453
Patent Document 2: Japanese Laid-Open Patent Application No. 2004-112617

### SUMMARY OF THE INVENTION

The present invention solves or reduces one or more of the above problems.

In one aspect of this disclosure, there is provided an information processing terminal, including: a generation part configured to generate image data indicating a first image where address information of predetermined data is embedded in a second image being displayed at a display device; and a transmission part configured to transmit the image data generated by the generation part to have a destination for sharing the second image be a share of the image data.

### BRIEF DESCRIPTION OF THE DRAWINGS

In the following, embodiments of the present invention will be described with reference to the accompanying drawings.
FIG. 1 is a schematic diagram illustrating an example of a transmission system according to a first embodiment;
FIG. 2 is a hardware configuration of an example of a transmission terminal according to the first embodiment;
FIG. 3 is a hardware diagram of an example of a computer system according to the first embodiment;
FIG. 4 is a diagram illustrating functional configurations of the transmission terminal, a transmission management system, and a transmission terminal management system;
FIG. 5 is a diagram illustrating process blocks of an external input apparatus according to the first embodiment;
FIG. 6 is a diagram for explaining an example of a terminal authentication management table according to the first embodiment;
FIG. 7 is a diagram for explaining an example of a shared literature management table pertinent to the first embodiment;
FIG. 8 is a sequence diagram for explaining an example of a shared literature data upload process according to the first embodiment;
FIG. 9 is a diagram illustrating an example of a shared literature management screen according to the first embodiment;
FIG. 10 is a sequence diagram illustrating an example of a screen sharing process according to the first embodiment;
FIG. 11 is a diagram illustrating an example of a screen share start screen according to the first embodiment;
FIG. 12 is a diagram illustrating an example of a shared literature selection screen according to the first embodiment;
FIG. 13 is a diagram illustrating an example of a screen sharing state screen according to the first embodiment;
FIG. 14 is a sequence diagram illustrating an example of a shared literature data download process according to the first embodiment;
FIG. 15 is a sequence diagram illustrating an example of a screen sharing process according to a second embodiment;
FIG. 16 is a sequence diagram illustrating an example of a screen sharing process according to a third embodiment;
FIG. 17 is a diagram illustrating a screen example of shared literature data according to the third embodiment; and
FIG. 18 is a sequence diagram illustrating an example of an update process of the shared literature data according to the third embodiment.

### DESCRIPTION OF THE PREFERRED EMBODIMENTS

In the following, an embodiment according to the present invention will be described with reference to the accompanying drawings.

### [First Embodiment]

### <Entire Configuration of Embodiment>

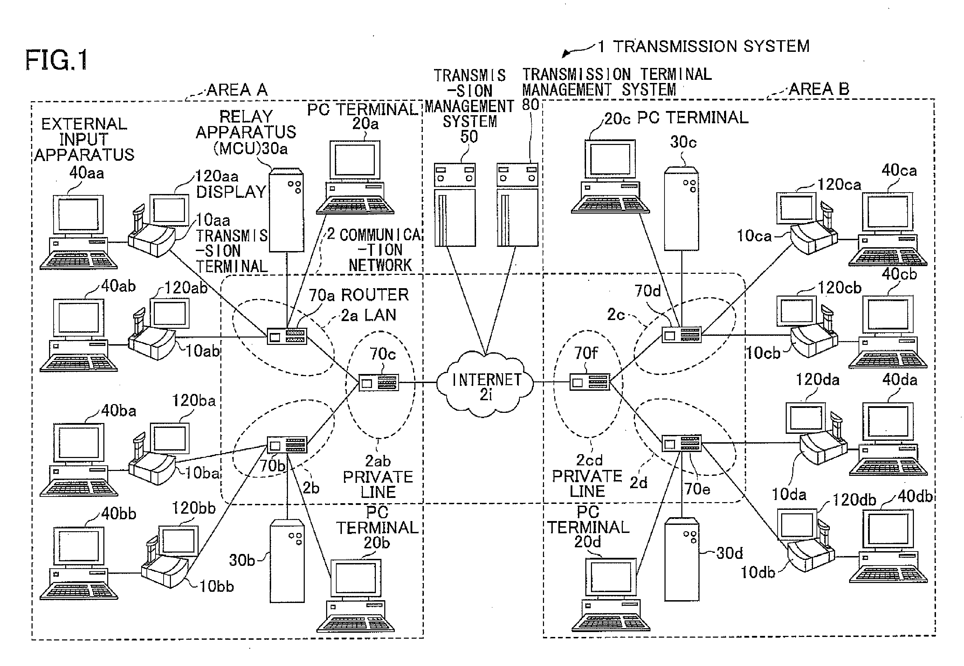

FIG. 1 is a diagram illustrating an example of a transmission system according to a first embodiment.

As a transmission system 1, there are a data providing system for transmitting content data in one direction from a transmission terminal to another transmission terminal via a transmission management system, and a communication system for mutually transmitting information among multiple transmission terminals via the transmission management system.

As an example of the communication system, there are a video conference system, a voice conference system, a screen sharing system, and the like. In the embodiment, a case, in which the transmission system 1 is applied to the video conference system, will be described. The transmission system 1 according to the embodiment may be applied to the communication system and the data providing system other than the video conference system.

A configuration of the transmission system 1 is illustrated as an example in FIG. 1. In the transmission system 1 in FIG. 1, multiple transmission terminals 10aa, 10ab, 10ba, 10bb, 10ca, 10cb, 10da, and 10db, PC terminals 20a, 20b, 20c, and 20d, displays 120aa, 120ab, 120ba, 120bb, 120ca, 120cb, 120da, and 120db for respective transmission terminals 10aa, 10ab, 10ba, 10bb, 10ca, 10cb, 10da, and 10db, multiple relay apparatuses 30a, 30b, 30c, and 30d, a transmission management system 50, and a transmission terminal management system 80 are connected by a communication network.

In the transmission system 1, external input apparatuses 40aa, 40ab, 40ba, 40bb, 40ca, 40cb, 40da, and 40db are detachably connected to respective transmission terminals 10aa, 10ab, 10ba, 10bb, 10ca, 10cb, 10da, and 10db.

It is noted that any transmission terminal of the transmission terminals 10aa through 10db is referred to as a "transmission terminal 10". Similarly, any PC terminal of the PC terminals 20a through 20d is referred as a "PC terminal 20". Moreover, any display of the displays 120aa through 120db is referred to as a "display 120". Furthermore, any relay apparatus of the relay apparatuses 30a through 30d is referred to as a "relay apparatus 30".

Furthermore, any external input apparatus of the external input apparatuses 40aa, 40ab, 40ba, 40bb, 40ca, 40cb, 40da, and 40db is referred to as an "external input apparatus 40".

The transmission terminal 10 sends and receives image data, voice data, and the like to and from another transmission terminal 10. In the embodiment, a case in which image data are for a still image will be described. The embodiment may be applied to a case in which image data may be a moving image. Also, images of the image data may include both the still image and the moving image.

The PC terminal 20 is a general purpose PC which a user of the transmission system 1 uses. In the embodiment, shared literature data are uploaded to the transmission management system 50 by using the PC terminal 20. Also, the shared literature data are downloaded from the transmission management system 50 by using the PC terminal 20. For example, the shared literature data may be data pertinent to literature used at a conference using the transmission system 1. For example, the shared literature data may be used by using document creation software, spreadsheet software, presentation software, or the like.

The relay apparatus 30 relays the image data or the voice data among multiple transmission terminals 10. Also, the relay apparatus 30 changes quality of the image data or the voice data depending on a communication bandwidth between the transmission terminals 10.

The transmission management system 50 unitarily manages the transmission terminal 10 and the relay apparatus 30.

The transmission terminal management system 80 processes various requests and the like from the PC terminals 20.

Multiple routers 70a, 70b, 70c, 70d, 70e, and 70f illustrated in FIG. 1 carry out an optimum route selection of the image data or the voice data. Any router of the multiple routers 70a through 70f is referred to as a "router 70".

The transmission terminal 10aa, the transmission terminal 10ab, the relay apparatus 30a, and the router 70a are connected by a LAN 2a in such a manner that they can carry out mutual communication. Similarly, the transmission terminal 10ba, the transmission terminal 10bb, the relay apparatus 30b, and the router 70b are connected by a LAN 2b in such a manner that they can carry out mutual communication. Also, the LAN 2a and the LAN 2b are connected in such a manner that they can carry out mutual communication by a private line 2ab including the router 70c in such a manner that they can carry out mutual communication, and installed in a certain area A. For example, the area A is Japan, the LAN 2a is installed in a Tokyo office, and the LAN 2b is installed in an Osaka office.

On the other hand, the transmission terminal 10ca, the transmission terminal 10cb, the relay apparatus 30c, and the router 70d are connected by a LAN 2c in such a manner that they can carry out mutual communication. The transmission terminal 10da, the transmission terminal 10db, the relay apparatus 30d, and the router 70e are connected by a LAN 2d in such a manner that they can carry out mutual communication. Also, the LAN 2c and the LAN 2d are connected by a private line 2cd including the router 70f in such a manner that they can carry out mutual communication, and are installed in a certain area B. For example, the area B is the USA, the LAN 2c is installed in a New York office, and the LAN 2d is installed in a Washington, D.C. office.

The area A and the area B are connected through the Internet 2i via the router 70c and 70f in such a manner that they can carry out mutual communication, respectively. Also, the transmission management system 50 and the transmission terminal management system 80 are connected to the transmission terminals 10, the PC terminals 20, and the relay apparatuses 30 through the Internet 2i in such a manner that they can carry out mutual communication. The transmission management system 50 and the transmission terminal management system 80 may be installed in the area A or the area B, or may be installed in another area other than the area A and the area B.

It is noted that in the first embodiment, the communication network 2 includes the LAN 2a, the LAN 2b, the private line 2ab, the Internet 2i, the private line 2cd, the LAN 2c and the LAN 2d. In the communication network 2, not only wired parts, but also wireless parts where communication is carried out wirelessly by WiFi (Wireless Fidelity), Bluetooth (registered trademark), or such, may be included.

In the first embodiment, the transmission terminals 10 are separated from the external input apparatuses 40. However, the transmission terminals 10 and the external input apparatuses 40 may be installed in together in one apparatus or the like. Also, in the first embodiment, the relay apparatus 30, the transmission management system 50, and the transmission terminal management system 80 are separated from each other. However, the relay apparatus 30, the transmission management system 50, and the transmission terminal management system 80 may be partially or entirely installed in one apparatus or the like.

### <Hardware Configuration>

Next, a hardware configuration in the first embodiment will be described.

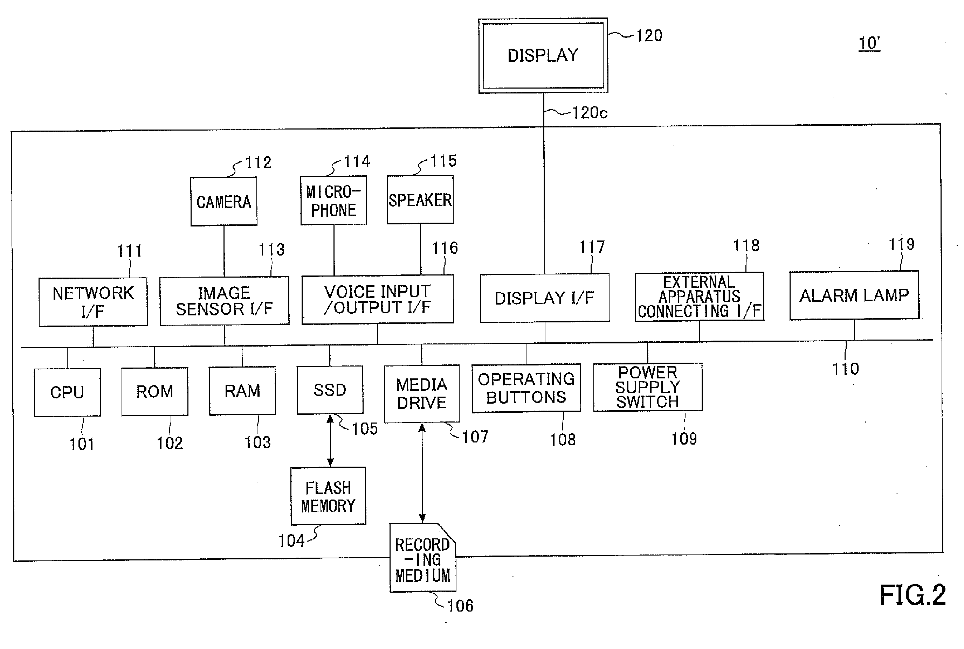

For example, the transmission terminal 10 is realized by an information processing terminal 10' and includes a hardware configuration as illustrated in FIG. 2.

FIG. 2 is a diagram illustrating the hardware configuration of an example of the information processing terminal according to the first embodiment. The information processing terminal 10' depicted in FIG. 2 includes a Central Processing Unit (CPU) 101, a Read Only Memory (ROM) 102, a Random Access Memory (RAM) 103, a Solid State Drive (SSD) 105, a media drive 107, operating buttons 108, a supply switch 109, a network InterFace (I/F) 111, an image sensor I/F 113, a voice input/output I/F 116, a display I/F 117, an external apparatus connecting I/F 118, an alarm lamp 119, and the like. These component parts are mutually connected by a bus 110. Also, the information processing terminal 10' includes a camera 112, a microphone 114, a speaker 115, and the like.

The CPU 101 is an operation device which controls the entirety of the information processing terminal 10' and functions thereof. The ROM 102 is a non-volatile semiconductor memory (memory device) which retains a program and data even if power is turned off. The RAM 103 is a volatile semiconductor memory (memory device) which temporarily retains the program and the data. The SSD 105 controls a read access and a write access with respect to a flash memory 104 which stores various sets of data such as the image data, the voice data, and the like. It is noted that instead of the flash memory 104, an Electrically Erasable and Programmable ROM (EEPROM) or such may be used as long as it is a non-volatile memory for reading and writing data. The media drive 107 controls reading and writing of data from and to a recording medium 106. The recording medium 106 is freely detachable from the information processing terminal 10'.

Also, the operating buttons 108 are used for various operations of the information processing terminal 10'. The power supply switch 109 is a switch to turn on or off power of the information processing terminal 10'. The network I/F 111 is an interface to connect to a communication network. The image sensor I/F 113 controls driving the camera 112. The voice input/output I/F 116 processes input and output of voice signals from the microphone 114 inputting voice sound and to the speaker 115 outputting voice sound.

The display I/F 117 is a display part made of a liquid crystal, an organic electroluminescence (EL) material or such displaying an image of an object, operating icons, or such. Also, a display 120 is connected to the display I/F 117 by a cable 120c. The cable 120c may be a cable for an analog RGB (VGA) signal, a cable for a component video signal, a cable for High-Definition Multimedia Interface (HDMI) (registered trademark), a cable for Digital Video Interactive (DVI) signal, or such.

The external apparatus connecting I/F 118 is an interface for an external apparatus. The external apparatus such as a camera provided in the outside, a microphone provided in the outside, a speaker provided in the outside or such may be electrically connected by a USB (Universal Serial Bus) cable or such. In a case where the camera provided in the outside is connected, the cameral provided in the outside is driven with a higher priority than the camera 112 of the built-in type. In a case where the microphone provided in the outside or the speaker provided in the outside is connected, the microphone provided in the outside or the speaker provided in the outside is driven with a higher priority than the microphone 114 of the built-in type or the speaker 115 of the built-in type. The alarm lamp 119 informs of an abnormal state of each of the various functions of the information processing terminal 10'.

The camera 112 includes a lens and a solid state image sensor converting light into electric charge and obtaining a signal of an image (video) of an object. As the solid state image sensor, a CMOS (Complementary Metal Oxide Semiconductor) device, a CCD (Charge Coupled Device) or such may be used.

For example, the transmission terminal 10 according to the first embodiment realizes various processes described below by executing a program in the information processing terminal 10' having the above-described hardware configuration.

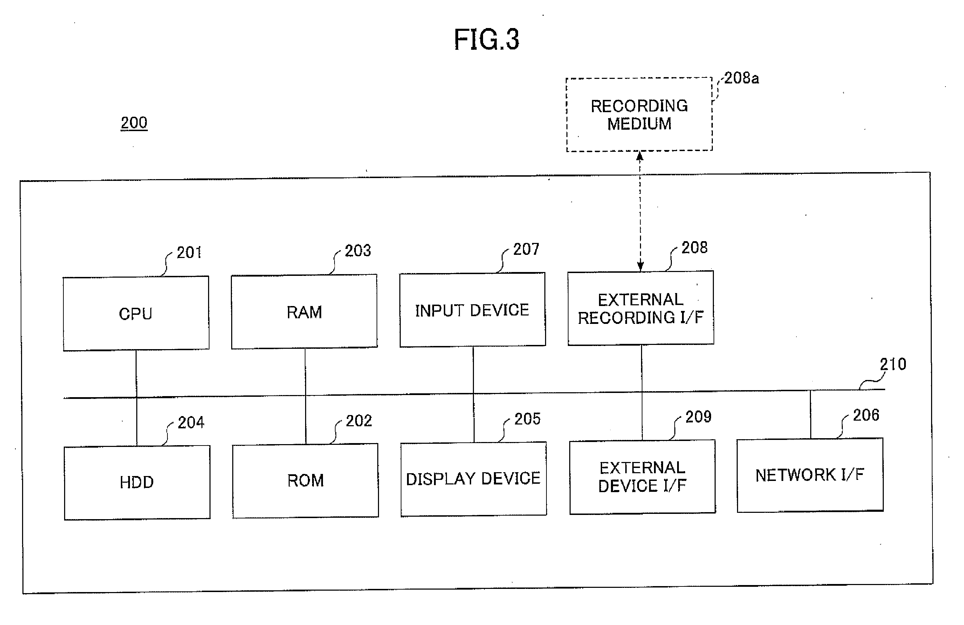

For example, each of the PC terminals 20, the relay apparatuses 30, the external input apparatuses 40, the transmission management system 50, and the transmission terminal management system 80 is realized by a computer system 200 having a hardware configuration as illustrated in FIG. 3.

FIG. 3 is a diagram illustrating a hardware configuration of an example of the computer system according to the first embodiment. The computer system 200 includes a CPU 201, a ROM 202, a RAM 203, a Hard Disk Drive (HDD) 204, a display device 205, a network I/F 206, an input device 207, an external recording I/F 208, and an external device I/F 209. Each of these hardware components are mutually connected via a bus 210.

The CPU 201 is an operation device which controls the entirety of the computer system 200 and functions thereof. The ROM 202 is a non-volatile semiconductor memory (memory device) which retains a program and data even if power is turned off. The RAM 203 is a volatile semiconductor memory (memory device) which temporarily retains the program and the data. The HDD 204 is a non-volatile storage device which stores programs and data. For example, the program and the data stored in the HDD 204 include an Operating System (OS) being basic software to control the entirety of the computer system 200, application software providing various functions operated on the OS. The HDD 204 is used to maintain the program and the data by a predetermined file system and/or DataBase (DB).

The display device 205 includes a Liquid Crystal Display (LCD), a Cathode Ray Tube (CRT), and the like, and displays various information items such as a process result, a cursor, a menu, a window, a letters, or an image, and the like. The network I/F 206 is an interface for connecting to the communication network. The input device 207 includes a keyboard, a mouse, a touch panel, and the like, and is used to input various operation signals to the computer system 200.

The external recording I/F 208 is an interface for an external recording medium. A recording medium 208a corresponds to the external recording medium. A program realizing the first embodiment is stored in the recording medium 208a. The computer system 200 reads and/or writes data stored in the recording medium 208a via the external recording I/F 208.

As the recording medium 208a, a Universal Serial Bus (USB) memory, a Secured Digital (SD) memory card, a Digital Versatile Disk (DVD), a Compact Disk (CD), a flexible disk, and the like may be used.

The external device I/F 209 is an interface for sending and receiving information to and from an external device.

### <Software Configuration>

Next, a functional configuration of the first embodiment will be described.

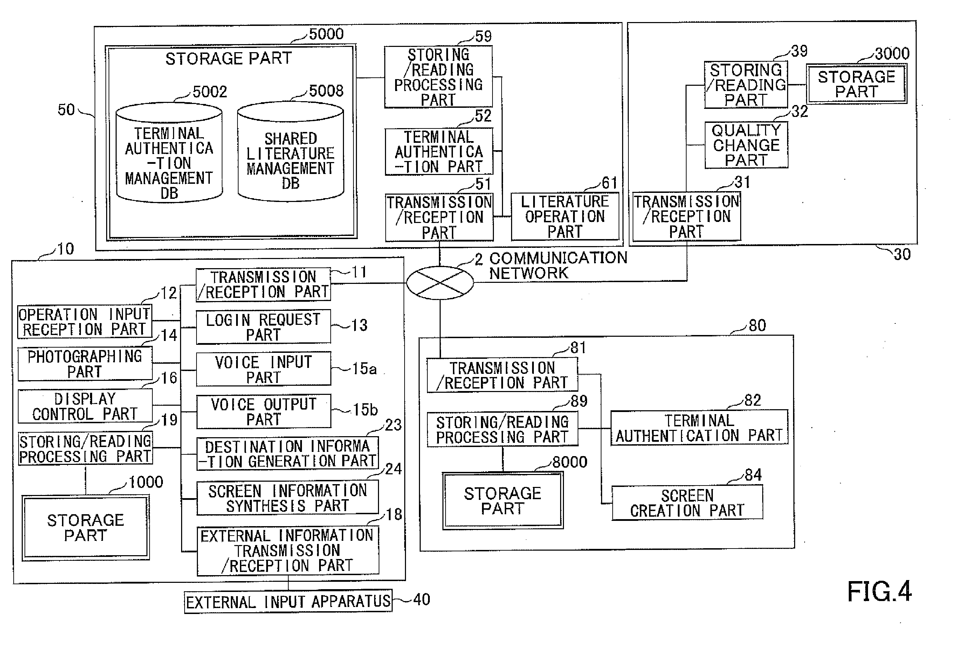

The transmission terminal 10, the transmission management system 50, and the transmission terminal management system 80 may be described by process blocks as depicted in FIG. 4, for example. FIG. 4 is a diagram illustrating functional configurations of the transmission terminal, the transmission management system, and the transmission terminal management system. «Transmission Terminal 10»

The transmission terminal 10 includes a transmission/reception part 11, an operation input reception part 12, a login request part 13, an photographing part 14, a voice input part 15a, a voice output part 15b, a display control part 16, an external information transmission/reception part 18, a storing/reading processing part 19, a destination information generation part 23, and a screen information synthesis part 24. These parts are realized by processes which one or more programs being installed into the transmission terminal 10 cause the CPU 101 to perform.

The transmission terminal 10 also uses a storage part 1000. The storage part 1000 may be realized by using a storage apparatus or the like connected to the SSD 105 or the transmission terminal 10 through a network.

The transmission/reception part 11 is realized by the network I/F 111, and sends and receives various sets of data to and from the transmission terminal 10, the relay apparatus 30, the transmission management system 50, and the like through the communication network 2. The operation input reception part 12 is realized by the operating buttons 108 and the power supply switch 109, and receives various inputs from a user of the transmission terminal 10. The login request part 13 sends login request information to the transmission management system 50 from the transmission/reception part 11 through the communication network 2 when the operation input reception part 12 is turned on.

The photographing part 14 is realized by the camera 112 and the image sensor I/F 113. The photographing part 14 images an object and outputs acquired image data. The voice input part 15a is realized by the microphone 114 and the voice input/output I/F 116. The voice input part 15a inputs voice sound of the user of the transmission terminal 10, converts the voice sound of the user into a voice signal, and outputs voice data pertinent to the voice signal. The voice output part 15b is realized by the speaker 115 and the voice input/output I/F 116. The voice output part 15b converts the voice signal pertinent to the voice data and outputs the voice sound of the user. The display control part 16 is realized by the display I/F 117, and controls sending the image data to the display 120 being externally attached.

The external information transmission/reception part 18 sends and receives data to and from the external input apparatus 40 via the external apparatus connecting I/F 118. The storing/reading processing part 19 stores various sets of data to the storage part 1000, and conducts a process for reading the various sets of data being stored in the storage part 1000. The storage part 1000 stores a terminal identification and a password of the transmission terminal 10, the image data and the voice data, a relay apparatus ID for identifying the relay apparatus 30 which sends and receives various sets of data, an IP address of another transmission terminal 10 being a destination of data transmission, and the like. Also, the storage part 1000 stores various programs which are sent to the external input apparatus 40 and operate in the external input apparatus 40. For example, the various programs may acquire display data being displayed at the display device 205 of the external input apparatus 40, and send the display data to the transmission terminal 10. For example, the display data may correspond to the image data in which an image displayed at the display device 205 is formatted into Joint Photographic Experts Group (JPEG) or Bitmap, or a drawing command in a format of Graphics Device Interface (GDI) or the like. That is, the display data may correspond to a hardcopy of the display device 205.

The destination information generation part 23 generates storing destination information based on address information of the shared literature data being stored in a shared literature management DB 5008 of the transmission management system 50. For example, the storing destination information may correspond to the address information of the shared literature data, for example, data in which a Uniform Resource Locator (URL) is formed into a QR code (registered trademark).

The screen information synthesis part 24 conducts a process for synthesizing the storing destination information generated by the destination information generation part 23, with the display data received from the external input apparatus 40.

### <<Relay Apparatus 30>>

The relay apparatus 30 includes a transmission/reception part 31, a quality change part 32, and a storing/reading part 39. These parts are realized by processes by which one or more programs installed into the relay apparatus 30 cause the CPU 201 to perform.

The relay apparatus 30 uses a storage part 3000. The storage part 3000 may be realized by using a storage apparatus or the like connected to the HDD 204 or the relay apparatus 30 through the network.

A transmission/reception part 51 is realized by the network I/F 206, and sends and receives various sets of data to and from the transmission terminal 10, the transmission management system 50, and the like through the communication network 2. The quality change part 32 changes quality of the image data or the voice data depending on the communication bandwidth between the transmission terminals 10. The storing/reading part 39 stores various sets of data in the storage part 3000, and conducts a process for reading the various sets of data stored in the storage part 3000.

The storage part 3000 stores, for example, information pertinent to a quality change described above.

### <<Transmission Management System 50>>

The transmission management system 50 includes a transmission/reception part 51, a terminal authentication part 52, a storing/reading processing part 59, and a literature operation part 61. These parts are realized by processes by which one or more programs installed into the transmission management system 50 cause the CPU 201 to perform.

The transmission management system 50 uses the storage part 5000. The storage part 5000 may be realized by a storage device or the like connected to the HDD 204 or the transmission management system 50 through the network.

The transmission/reception part 51 is realized by the network I/F 206, and sends and receives various sets of data to and from the transmission terminal 10, the relay apparatus 30, the transmission management system 50, the transmission terminal management system 80, and the like. When receiving a login request through the transmission/reception part 51, the terminal authentication part 52 conducts an authentication process of the transmission terminal 10 based on the terminal ID and the password included in the login request, and a terminal authentication management DB 5002, which will be described later. The storing/reading processing part 59 stores various sets of data in the storage part 5000, and conducts a process for reading the various sets of data stored in the storage part 5000.

The literature operation part 61 operates the shared literature data stored in the shared literature management DB 5008 which will be described later. For example, the literature operation part 61 edits or deletes the shared literature data stored in the shared literature management DB 5008.

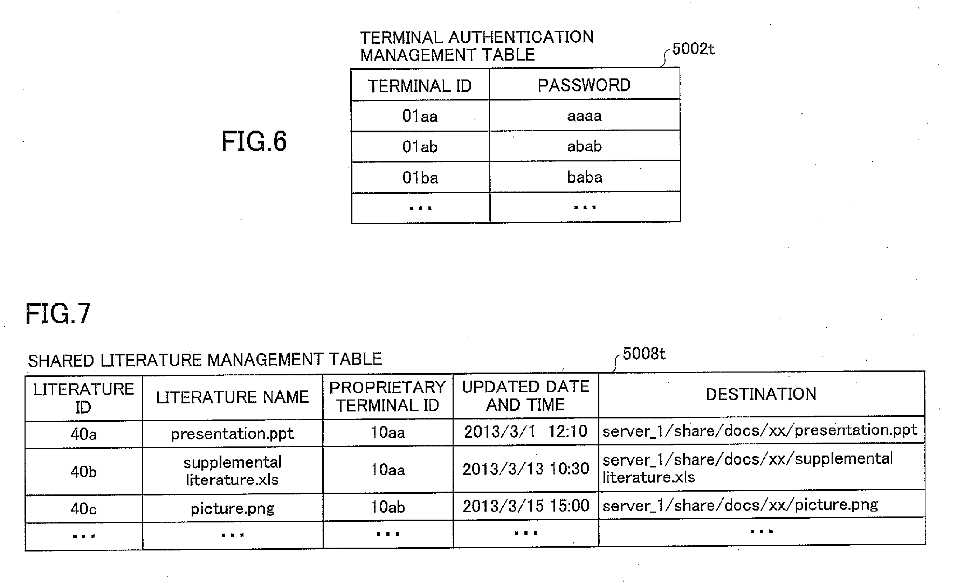

The storage part 5000 includes the terminal authentication management DB 5002 formed by a terminal authentication management table 5002t as illustrated in FIG. 6. FIG. 6 is a diagram for explaining an example of the terminal authentication management table according to the first embodiment. In the terminal authentication management table 5002t, the password is associated with each of the terminal IDs of all the transmission terminals 10 which is managed by the transmission management system 50. For example, in the terminal authentication management table 5002t depicted in FIG. 6, the terminal ID of the transmission terminal 10aa is "01aa" and the password thereof is "aaaa".

In the storage part 5000, a shared literature management DB 5008 is formed by a shared literature management table 5008t. FIG. 7 is a diagram for explaining an example of the shared literature management table pertinent to the first embodiment. In the shared literature management table 5008t, the shared literature data uploaded to the transmission management system 50 are managed.

Each of attributes of the shared literature management table 5008t will be described. A literature ID is information to uniquely identify the shared literature data which are updated. A literature name indicates a name of the shared literature data. An updated date and time indicates a date and time when the shared literature data are uploaded or edited. A destination is address information in the shared literature management DB 5008 which stores the shared literature data. Moreover, since the shared literature data are associated with the terminal ID of the transmission terminal 10 and uploaded as described later, the shared literature management table 5008t also includes a proprietary terminal ID as an attributes.

### <<Transmission Terminal Management System 80>>

The transmission terminal management system 80 includes a transmission/reception part 81, a terminal authentication part 82, a screen creation part 84, and a storing/reading processing part 89. These parts are realized by processes by which one or more programs installed into the transmission terminal management system 80 cause the CPU 201 to perform.

The transmission terminal management system 80 also uses a storage part 8000. The storage part 8000 may be realized by using a storage apparatus or the like connected to the HDD 204 or the transmission terminal management system 80 through the network.

The transmission/reception part 81 is realized by the network I/F 206, and sends and receives various sets of data to and from the PC terminal 20, the transmission management system 50, and the like through the communication network 2. When the login request information is received from the PC terminal 20, the terminal authentication part 82 accesses the transmission management system 50, and conducts an authentication process of the PC terminal 20 based on the terminal ID and the password included in the login request information and the terminal authentication management DB 5002. The screen creation part 84 creates HyperText Markup Language (HTML) data of a screen to display at a Web browser of the PC terminal 20 in response to an access from the PC terminal 20. The storing/reading processing part 89 stores various sets of data in the storage part 8000, and conducts a process for reading the various sets of data stored in the storage part 8000. The storage part 8000 may store, for example, the HTML data of the screen to display at the Web browser of the PC terminal 20, which are described above.

Next, a functional configuration of the external input apparatus 40 will be described.

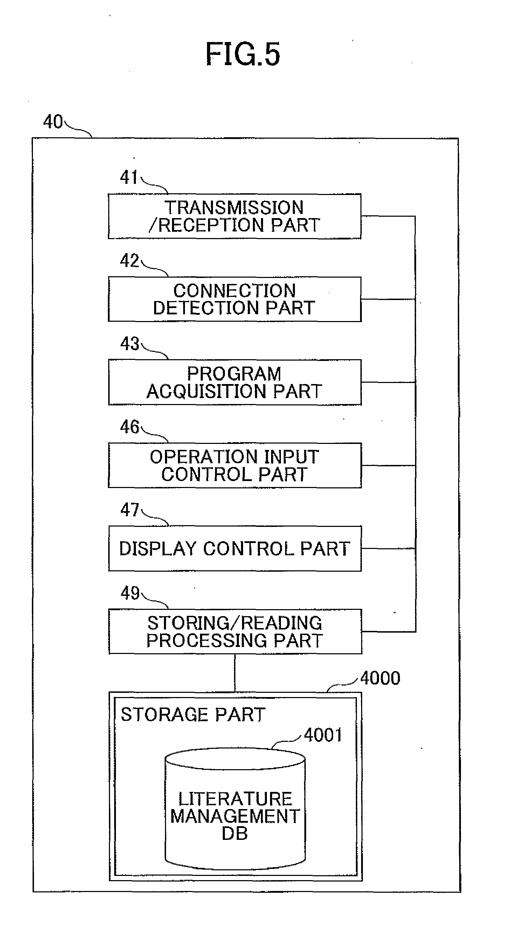

For example, the external input apparatus 40 may be represented by process blocks as depicted in FIG. 5. FIG. 5 is a diagram illustrating the process blocks of the external input apparatus according to the first embodiment.

The external input apparatus 40 includes a transmission/reception part 41, a connection detection part 42, a program acquisition part 43, an operation input control part 46, a display control part 47, and a storing/reading processing part 49. These parts are realized by processes by which one or more programs installed into the external input apparatus 40 cause the CPU 201 to perform.

The external input apparatus 40 also uses a storage part 4000. The storage part 4000 may be realized by using a storage apparatus or the like connected to the HDD 204 or the external input apparatus 40 through the network. The storage part 4000 includes a literature management DB 4001.

The transmission/reception part 41 is realized by the network I/F 206, and sends and receives various sets of data to and from the transmission terminal 10. The connection detection part 42 detects, by the external device I/F 209, that data communication with the external device becomes available. For example, the external device I/F 209 detects that the external input apparatus 40 becomes available to send and receive data to and from the transmission terminal 10. The program acquisition part 43 acquires the various sets of programs described above from the transmission terminal 10 connected through the transmission/reception part 41, and installs the acquired various sets of programs.

The operation input control part 46 accepts an input by an operation of a user of the external input apparatus 40. The display control part 47 displays an image which the storing/reading processing part 49, which will be described later, reads out, at the display device 205. The storing/reading processing part 49 stores various sets of data in the storage part 4000, and conducts a process for reading the various sets of data stored in the storage part 4000.

The storage part 4000 stores literature data and the like. For example, the literature data may be data used by document creation software, spreadsheet software, presentation software, or the like.

The PC terminal 20 is a general purpose personal computer. Thus, the explanation thereof will be omitted.

### <Details of Processes>

In the following, processes of the transmission system 1 according to the first embodiment will be described in detail. First, a process for uploading the shared literature data to the transmission management system 50 by using the PC terminal 20 will be described. It is noted that the PC terminal 20 uploads the shared literature data to the transmission management system 50 through the transmission terminal management system 80.

The shared literature data are uploaded beforehand. For example, in a conference using the transmission system 1, it is possible even for a participant who has attended at the last moment of the day to download the shared literature data which is uploaded and to acquire a conference material (the shared literature data).

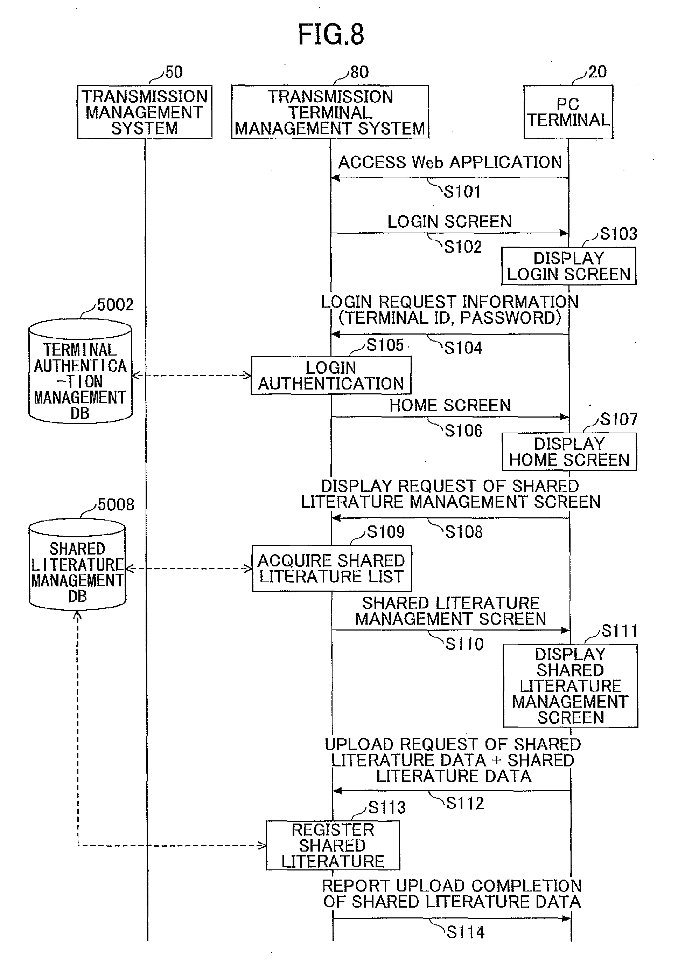

FIG. 8 is a sequence diagram for explaining an example of a shared literature data upload process according to the first embodiment. In the following, the shared literature data upload process in FIG. 8 will be described by referring to FIG. 4.

A user, who attempts to upload the shared literature data, accesses a Web application of the transmission terminal management system 80 by using the PC terminal 20 (step S101). The PC terminal 20 is the general purpose personal computer, and includes the Web browser. Accordingly, it is possible for the user, who attempts to upload the shared literature data, to access the Web application of the transmission terminal management system 80 by inputting a URL or the like to the Web browser of the PC terminal 20.

The transmission terminal management system 80 sends a login screen to the PC terminal 20 (step S102). The PC terminal 20 displays the login screen at the Web browser (step S103). The PC terminal 20 accepts inputs of the terminal ID and the password of the transmission terminal 10, and sends the login request information to the transmission terminal management system 80 (step S104). The login request information includes the terminal ID and the password of the transmission terminal 10.

By using the terminal ID and the password, the transmission terminal management system 80 authenticates whether the user of the PC terminal 20 is a valid user of the transmission system 1. Also, as described above, the shared literature data are associated with the terminal ID which is authenticated by login information, and are stored in the shared literature management DB 5008. In the first embodiment, for example, the PC terminal 20 inputs and sends the terminal ID "01aa" and the password "aaaa" of the transmission terminal 10 to the transmission terminal management system 80.

The terminal authentication part 82 of the transmission terminal management system 80 accesses the terminal authentication management DB 5002 of the transmission management system 50 and conducts a login authentication process (step S105). That is, the terminal authentication part 82 of the transmission terminal management system 80 searches for the terminal authentication management DB 5002 based on the terminal ID and the password included in the received login request information, and determines whether the same combination of the terminal ID and the password exists. In the first embodiment, the combination of the terminal ID "01aa" and the password "aaaa" exists in the terminal authentication management table S002t of the terminal authentication management DB 5002. Accordingly, it is determined that the login authentication is successful.

The transmission terminal management system 80 sends a home screen to the PC terminal 20 (step S106), and the home screen is displayed at the PC terminal 20 (step S107). The home screen is a screen which is first displayed after the login authentication for the PC terminal 20 is successful by the Web application of the transmission terminal management system 80. When the login authentication is failed in the step S105, the transmission terminal management system 80 sends an error screen to the PC terminal 20. The PC terminal 20 may display this error screen.

The PC terminal 20 sends a display request of the shared literature management screen to the transmission terminal management system 80 (step S108). For example, it is possible for the PC terminal 20 to send the display request of the shared literature management screen with respect to the transmission terminal management system 80 by clicking a link button or the like for displaying the shared literature management screen from the home screen being displayed.

When receiving the display request of the shared literature management screen from the PC terminal 20, the transmission terminal management system 80 acquires a shared literature list by accessing the shared literature management DB 5008 of the transmission management system 50 (step S109). The shared literature list is a list of sets of the shared literature data which are associated with the terminal ID of the PC terminal 20 logging in and are stored in the shared literature management DB 5008. That is, in the first embodiment, the transmission terminal management system 80 acquires the list of the sets of the shared literature data being associated with the terminal ID "01aa" from the shared literature management DB 5008. For example, in FIG. 7, the transmission terminal management system 80 acquires the list of sets of the shared literature data of a literature ID "40a" and a literature ID "40b".

The screen creation part 84 of the transmission terminal management system 80 creates a shared literature management screen from the acquired shared literature list, and sends the shared literature management screen to the PC terminal 20 (step S110). When receiving the shared literature management screen from the transmission terminal management system 80, the PC terminal 20 displays the shared literature management screen (step S111).

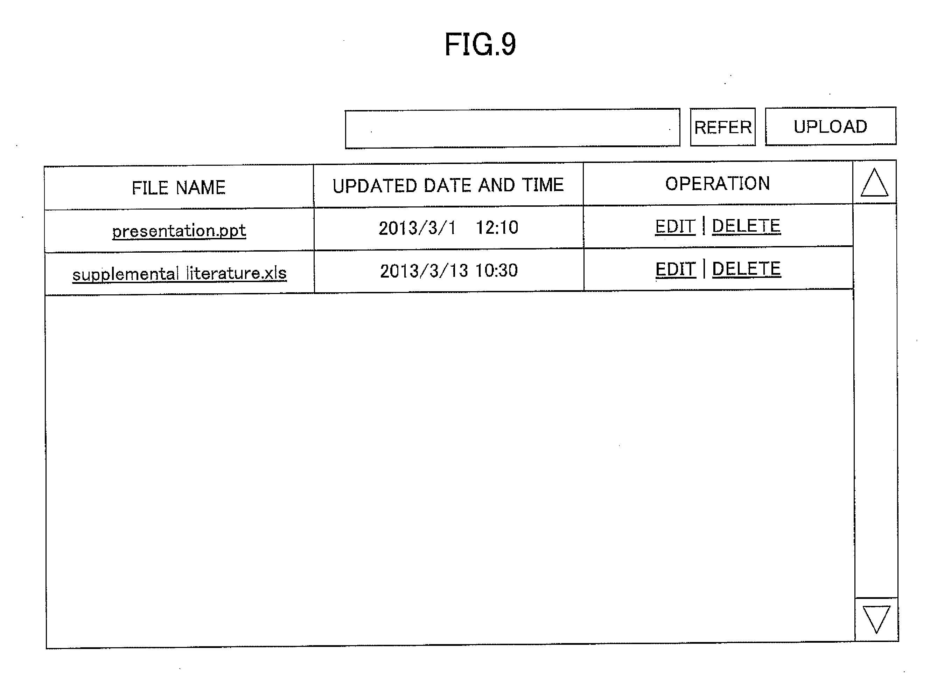

Next, the shared literature management screen displayed at the PC terminal 20 will be described. FIG. 9 is a diagram illustrating an example of the shared literature management screen according to the first embodiment.

The shared literature management screen illustrated in FIG. 9 displays a list of the shared literature data which are associated with the terminal ID "10aa" and stored in the shared literature management DB 5008. A file name and an updated date and time are the same as those in the shared literature management table 5008t (FIG. 7), and the explanation thereof will be omitted. The operation is carried out for the shared literature data. For example, when "EDIT" is pressed, for example, a file name of the shared literature data may be modified. Also, when "DELETE" is pressed, for example, the shared literature data may be deleted from the shared literature management DB 5008. These processes for "EDTT" and "DELETE" are carried out by the literature operation part 61 of the transmission management system 50.

An input of a password may be demanded in a case of "EDIT" and "DELETE".

By pressing "REFER" displayed at upper right in FIG. 9, it is possible to select the shared literature data to upload. For example, in a case of pressing "REFER", files, which are stored in a storage device in the PC terminal 20 and stored in a storage device connected thought the PC terminal 20, may be displayed in an Explorer (registered trademark) format, and the shared literature data to upload may be selected. When the shared literature data to upload are selected, an address of the shared literature data is displayed at an address bar to left of "REFER" . When the "UPLOAD" is pressed, the selected shared literature data are uploaded. An address of the shared literature data to upload may be directly input in the address bar.

FIG. 8 is referred to again. In the shared literature management screen displayed at the PC terminal 20, the shared literature data are selected. For example, when "UPLOAD" in FIG. 9 is pressed, the PC terminal 20 sends an upload request of the shared literature data and the shared literature data itself to the transmission terminal management system 80 (step S112). The selected shared literature data are data stored in the storage device of the PC terminal 20 or the storage device connected to the PC terminal 20 through the network.

When receiving the upload request of the shared literature data and the shared literature data itself from the PC terminal 20, the transmission terminal management system 80 registers the shared literature data (step S113). That is, the transmission terminal management system 80 accesses the shared literature management DB 5008 of the transmission management system 50, and registers the received shared literature data.

When the transmission terminal management system 80 completes registering the shared literature data to the shared literature management DB 5008, the transmission terminal management system 80 reports an upload completion of the shared literature data (step S114).

As described above, it is possible to upload the shared literature data to the shared literature management DB 5008 of the transmission terminal management system 80 by using the PC terminal 20. Accordingly, as described below, it is possible for the user of the transmission system 1 to acquire the shared literature data by downloading the shared literature data which are uploaded from the PC terminal 20. That is, for example, in a case of the conference using the transmission system 1, even if the conference material (shared literature data) has not been distributed beforehand, the address to upload the shared literature data is simply reported to the participant. Thus, it is possible for the participant of the conference to download the conference material (shared literature data).

Next, a screen sharing process will be described. In the screen sharing process, a screen (information) displayed at the display device 205 of the external input apparatuses 40 connected to the transmission terminal 10 is displayed at another transmission terminal 10. In the following, a case, in which the screen (information) displayed at the display device 205 of the external input apparatus 40aa connected to the transmission terminal 10aa, will be described at the transmission terminal 10db. In the following, it is assumed that the transmission terminal 10aa and the transmission terminal 10db have been successfully authenticated by the terminal authentication part 52 of the transmission management system 50, and data transmission is available through the relay apparatus 30a.

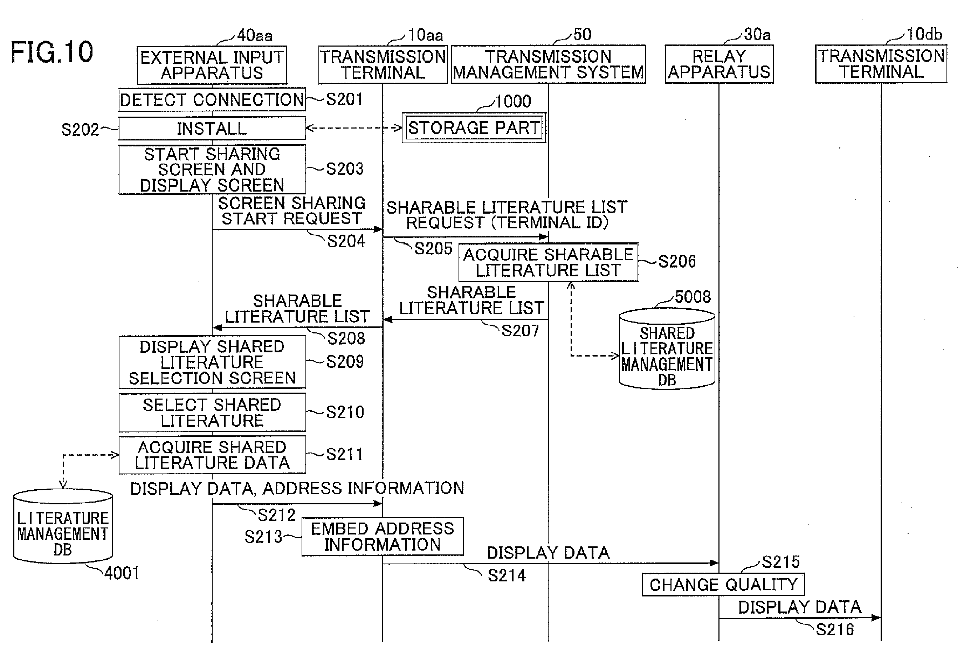

FIG. 10 is a sequence diagram illustrating an example of the screen sharing process according to the first embodiment. In the following, the screen sharing process in FIG. 10 will be described with reference to FIG. 4 and FIG. 5.

When the external input apparatus 40aa is connected to the transmission terminal 10aa, the connection detection part 42 of the external input apparatus 40aa detects this connection (step S201). When the external input apparatus 40aa is connected to the transmission terminal 10aa, the external input apparatus 40aa acquires a program necessary to share the screen from the storage part 1000 of the transmission terminal 10aa and installs the program (step S202). That is, the external input apparatus 40aa installs the program necessary to transmit the screen and information displayed at the display device 205 of the external input apparatus 40aa, to the transmission terminal 10aa. In a case in which the program has been already installed into the external input apparatus 40aa, the external input apparatus 40aa omits reinstalling the same program.

Next, the external input apparatus 40aa displays a screen share start screen (step S203). The screen share start screen is displayed by the program installed in step S202.

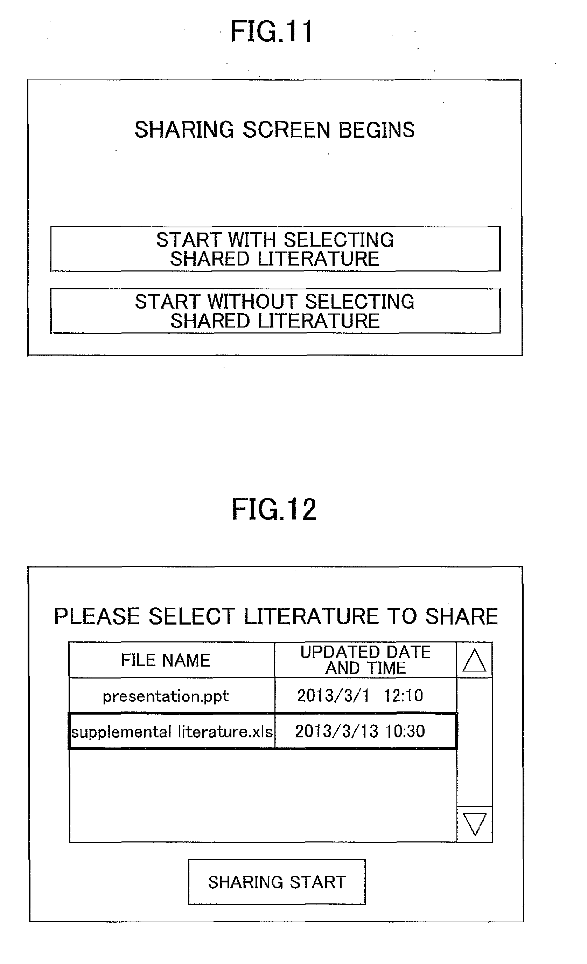

The screen share start screen will be described. FIG. 11 is a diagram illustrating an example of the screen share start screen according to the first embodiment. When the program is installed in response to a connection of the external input apparatus 40aa to the transmission terminal 10aa, the screen share start screen is displayed at the display device 205 of the external input apparatus 40aa.

When the user selects "START WITH SELECTING SHARED LITERATURE", as will be done after step S204, the user selects the shared literature data. The external input apparatus 40aa embeds address information of the shared literature management DB 5008 storing the selected shared literature data. On the other hand, when the user selects "START WITHOUT SELECTING SHARED LITERATURE", the external input apparatus 40aa performs a regular screen sharing. For example, the regular screen sharing corresponds to a screen sharing described in the Japanese Patent Application No. 2011-254453.

In the following, a process will be described in a case of selecting "START WITH SELECTING SHARED LITERATURE" in the screen share start screen.

The external input apparatus 40aa sends a screen share start request to the transmission terminal 10aa (step S204). The transmission terminal 10aa sends a request of a sharable literature list to the transmission management system 50 (step S205). This request includes the terminal ID "'01aa" of the transmission terminal 10aa. Sharable literature corresponds to sets of the shared literature data associated with the terminal ID "01aa" of the transmission terminal 10aa in multiple sets of the shared literature data stored in the shared literature management DB 5008.

When receiving the request of the sharable literature list from the transmission terminal 10aa, the transmission management system 50 acquires the list of the sets of the shared literature data (the sharable literature list) associated with the terminal ID included in the request (step S206). Therefore, the transmission management system 50 sends the acquired sharable literature list to the transmission terminal 10aa (step S207). This sharable literature list includes destination information (address information) for each of sets of the shared literature data listed in the sharable literature list.

The transmission terminal 10aa sends the sharable literature list received from the transmission management system 50, to the external input apparatus 40aa (step S208).

When receiving the sharable literature list from the transmission terminal 10aa, the external input apparatus 40aa displays a shared literature selection screen at the display device 205 (step S209).

The shared literature selection screen will be described. FIG. 12 is a diagram illustrating an example of the shared literature selection screen according to the first embodiment.

At the shared literature selection screen illustrated in FIG. 12, it is possible to select the shared literature data associated with the terminal ID "01aa" of the transmission terminal 10aa in the multiple sets of the shared literature data stored in the shared literature management DB 5008. For example, a row of the shared literature data being displayed may be clicked to select, and "SHARING START" may be pressed, so as to select the shared literature data to be used for screen sharing.

Referring back to FIG. 10, when the shared literature data used to the screen sharing is selected from the shared literature selection screen displayed in step S209 (step S210), the external input apparatus 40aa acquires the selected shared literature data from a literature management DB 4001 (step S211). Alternatively, in step S211, the shared literature data may be acquired from the shared literature management DB 5008.

The external input apparatus 40aa sends the transmission terminal 10aa the address information of the shared literature data selected in step S210 from display data to have the shared literature data acquired in step S211 display at the display device 205 (step S212). The screen information synthesis part 24 of the transmission terminal 10aa conducts the process for embedding the address information in the display data (step S213). For example, the destination information generation part 23 of the transmission terminal 10aa converts the received address information into the QR code, and the screen information synthesis part 24 generates the display data by superimposing the OR code with the received display data. Without being limited to the QR code, the address information is converted into another two dimensional code and is superimposed with the display data. Also, instead of converting the address information, for example, a destination URL for storing the shared literature data may be directly superimposed with the display data.

The transmission terminal 10aa sends the display data to which an embedding process in step 213 is conducted, to the relay apparatus 30a (step S214). The relay apparatus 30a performs the quality change after considering the communication bandwidth and the like with the transmission terminal 10db (step S215), and sends the display data to the transmission terminal 10db (step S216). For example, the quality change is performed to reduce image quality of the display data depending on the communication bandwidth with the transmission terminal 10db.

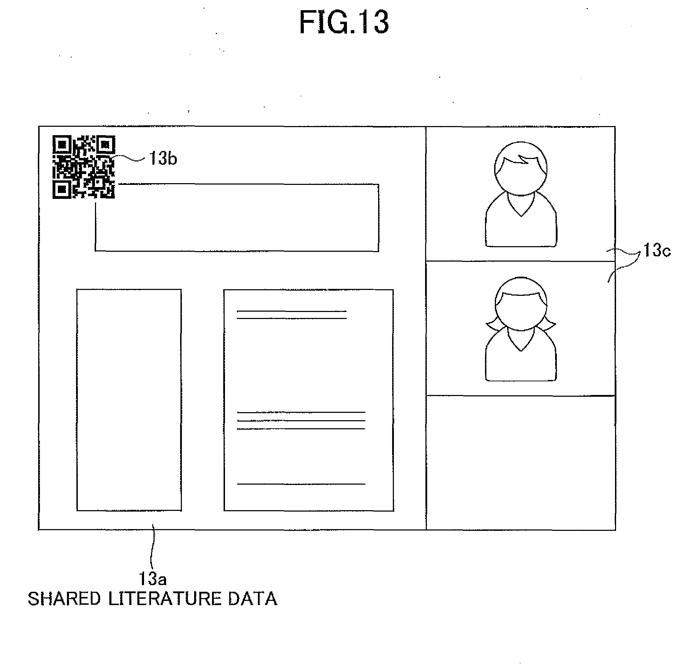

When receiving the display data, the transmission terminal 10db displays the shared literature data in which the address information is embedded, at the display 120db connected to the transmission terminal 10db. In the following, a screen sharing state screen displayed at the display 120db of the transmission terminal 10db will be described. FIG. 13 is a diagram illustrating an example of the screen sharing state screen according to the first embodiment.

In FIG. 13, the destination (address information) to store the shared literature data having been converted into the QR code, is displayed at an upper left of the shared literature data. In the example depicted in FIG. 13, in addition to shared literature data 13a and a QR code 13b, images 13c, which are taken by the camera 112 of the transmission terminal 10aa and are displayed at a right side of the screen, are also included in the display data.

As described above, the screen sharing is realized for the shared literature data 13a and the destination (address information) to store this shared literature data 13a being displayed at the display device 205 of the external input apparatus 40aa between the transmission terminal 10aa and the transmission terminal 10db. By this configuration, for example, instead of distributing the shared literature beforehand, it is possible to acquire the shared literature by reading the QR code 13b and downloading the shared literature data by a cellular phone or the like. Also, for example, even in a case in which the number of participants increases for the conference at the last moment of the day, it is possible to acquire the shared literature by reading the QR code 13b and downloading the shared literature data at the same time by the cellular phone or the like.

In the above described examples, the destination (address information) to store the shared literature is converted into the QR code and embed the QR code into the display data. Alternatively, instead of converting into the QR code, the URL of the destination may be directly superimposed with the display data. Also, for example, the address information may be converted and embedded into the display data so as that the address information can be acquired only for a case in which the screen displayed on the display 120 is taken by the camera 112 using a special application.

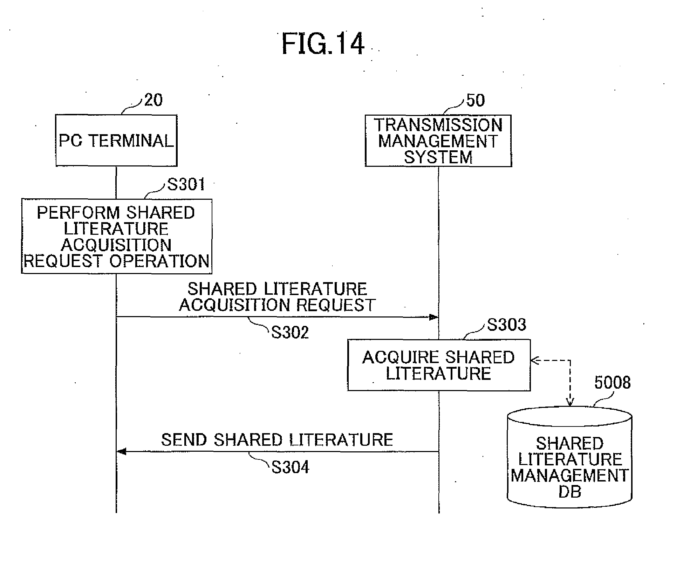

Next, a process for downloading the shared literature data from the PC terminal 20 will be described. It is noted that the PC terminal 20 may be the cellular phone or the like. FIG. 14 is a sequence diagram illustrating an example of a shared literature data download process according to the first embodiment.

The PC terminal 20 conducts an acquisition request operation of the shared literature data 13a (step S301), and sends the shared literature acquisition request including the address information (destination) of the shared literature data 13a to the transmission management system 50 (step S302). For example, the acquisition request operation of the shared literature data 13a may be conducted to read the destination of the shared literature data from the QR code, and to access the destination of the shared literature data by using the Web browser.

When receiving the shared literature acquisition request from the PC terminal 20, the transmission management system 50 acquires the shared literature data stored in the address information included in the shared literature acquisition request (step S303). After that, the transmission management system 50 sends the shared literature data acquired in step S303 to the PC terminal 20 (step S304).

As described above, it is possible for the PC terminal 2 0 to download the shared literature data. Accordingly, for example, it is possible for a user who attends the conference by using the transmission system 1 to read destination information of the shared literature data 13a from the QR code or the like being displayed at the display 120 of the transmission terminal 10, and to download the shared literature data 13a.

### [Second Embodiment]

Next, a second embodiment will be described. It is to be noted that in the second embodiment, different portions from the first embodiment will be mainly described. Accordingly, portions which are not specifically advertised may be the same as those in the first embodiment.

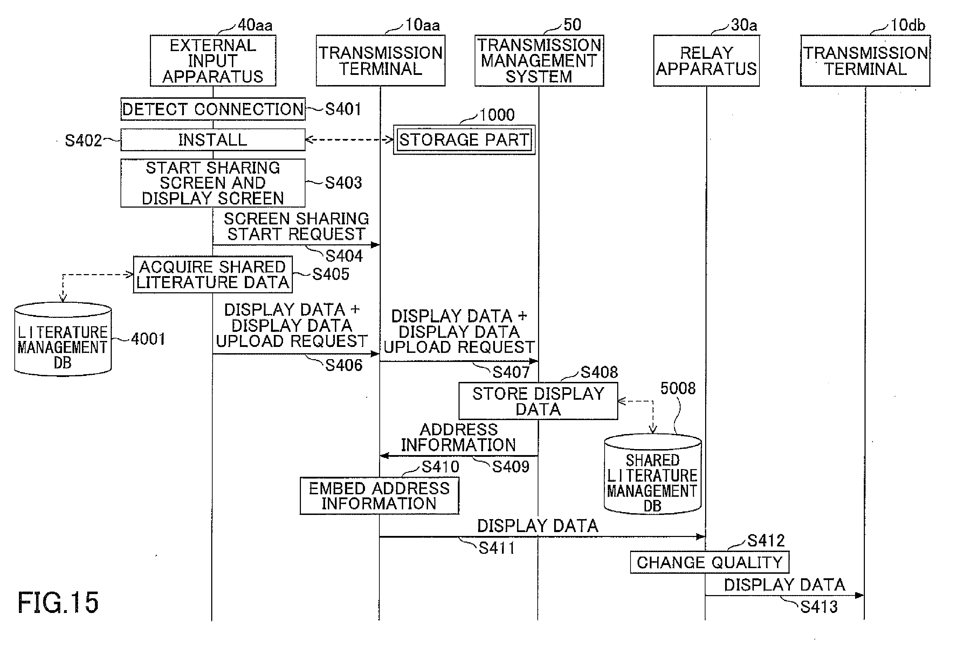

FIG. 15 is a sequence diagram illustrating an example of a screen sharing process according to the second embodiment. In the following, the sequence depicted in FIG. 15 will be described with reference to FIG. 4 and FIG. 5.

Processes in steps S401 through S404 are the same as processes in steps S201 through S204, respectively, and the explanations thereof will be omitted. Also, a process in step S405 is the same as a process in step S211, and the explanation thereof will be omitted.

The external input apparatus 40aa sends the shared literature data acquired in step S405 and the upload request of the shared literature data to the transmission terminal 10aa (step S406). The transmission terminal 10aa sends the received shared literature data of the upload request of the shared literature data to the transmission management system 50 (step S407). When receiving the shared literature data and the upload request of the shared literature data, the transmission management system 50 stores the received shared literature data in the shared literature management DB 5008 (step S408), and sends the destination (address information) to the transmission terminal 10aa (step S409). The transmission terminal 10aa conducts the process for embedding the received address information to the shared literature data received in step S406 (step S410).

Processes in steps S411 through S413 after that are the same as processes in steps S214 through S216, and the explanation thereof will be omitted.

As described above, according to the second embodiment, without uploading the shared literature data beforehand, it is possible to conduct the screen sharing. Hence, for example, even in a case of forgetting uploading the shared literature data before the conference using the transmission system 1 is conducted, it is possible for participants of the conference to download the shared literature data. For example, the shared literature data may be uploaded every time a display screen of the external input apparatus 40aa is updated.

### [Third Embodiment]

Next, a third embodiment will be described. It is to be noted that in the third embodiment, different portions from the first embodiment will be mainly described. Accordingly, portions which are not specifically referred to may be the same as those in the first embodiment.

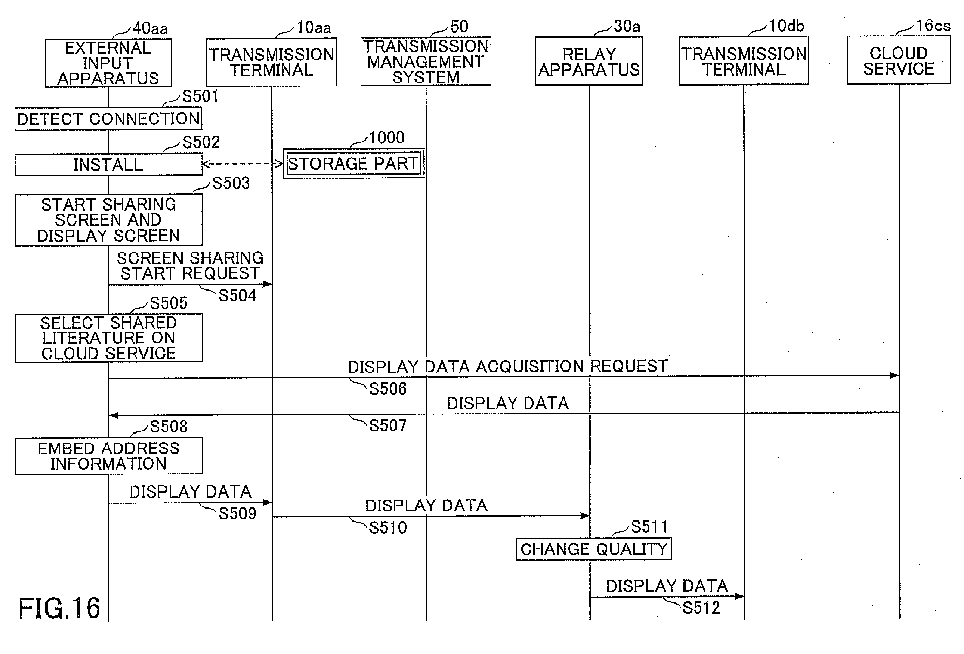

FIG. 16 is a sequence diagram illustrating an example of the screen sharing process according to the third embodiment. In the following, the sequence depicted in FIG. 16 will be described with reference to FIG. 4 and FIG. 5.

Processes in steps S501 through S504 are the same as processes in step S201 through S204, and the explanations thereof will be omitted. In the third embodiment, the external input apparatus 40aa conducts the process for embedding the address information into the display data as described later. A program necessary for this embedding process may be acquired from the transmission terminal 10aa and installed in step S502.

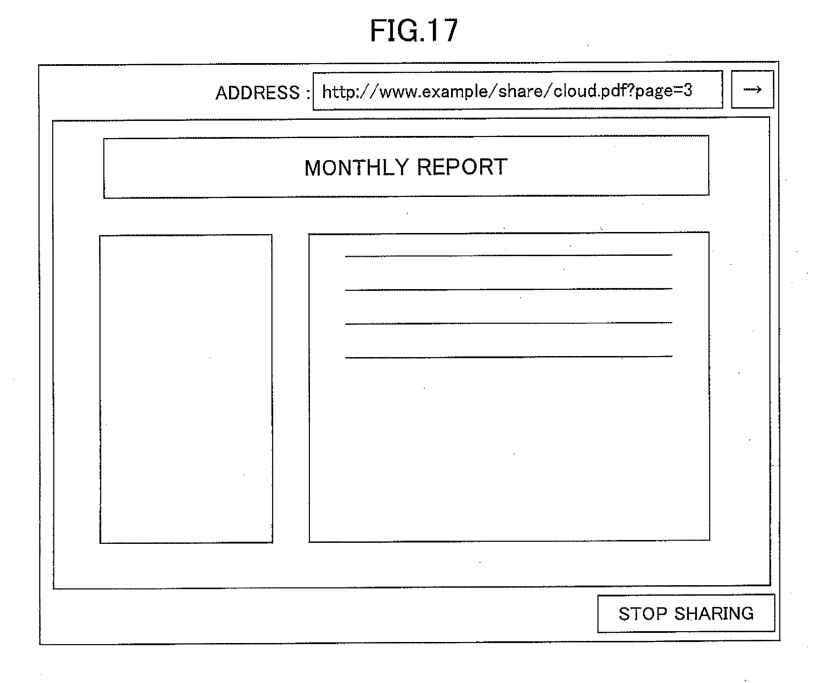

The external input apparatus 40aa selects the shared literature data in a cloud service 16cs (step S505). In order to select the shared literature data in the cloud service 16cs, for example, the URL of the shared literature data in the cloud service 16cs may be input as depicted in FIG. 17.

The external input apparatus 40aa sends a shared literature data acquisition request to the cloud service 16cs (step S506). The cloud service 16cs sends the shared literature data to the external input apparatus 40aa (step S507).

When acquiring the shared literature data from the cloud service 16cs, the external input apparatus 40aa conducts the process for embedding the address information such as the URL of the shared literature data into the display data used to display the shared literature data at the display device 205 (step S508). After that, the external input apparatus 40aa sends the display data, in which the embedding process has been conducted, to the transmission terminal 10aa (step S509).

Processes in steps S510 through S512 after that are the same as processes in steps S214 through S216, and the explanations thereof will be omitted.

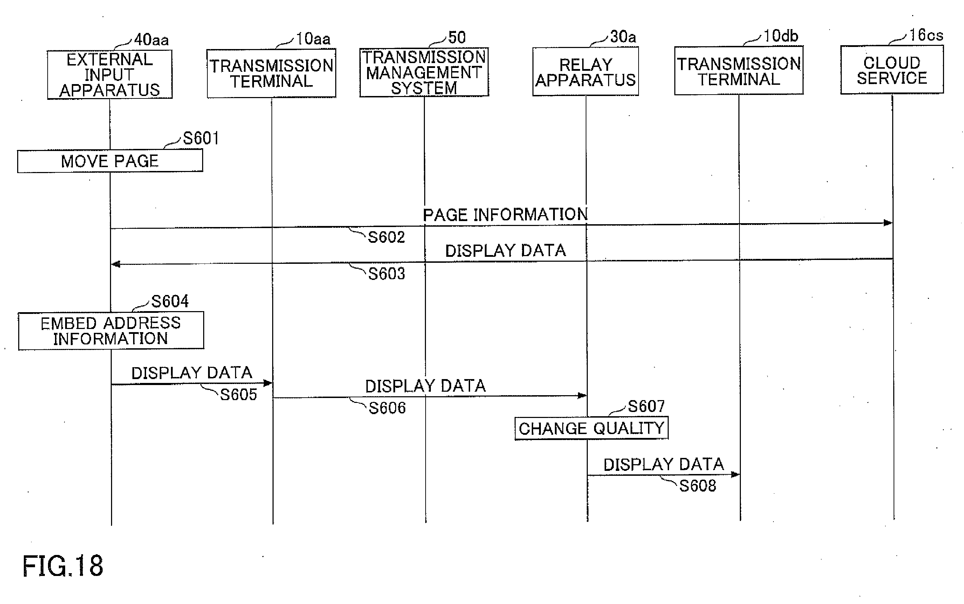

Next, an update process of the shared literature data will be described. FIG. 18 is a sequence diagram illustrating an example of the update process of the shared literature data according to the third embodiment.

When the external input apparatus 40aa conducts the update process to move to another page with respect to the shared literature data being displayed (step S601), the external input apparatus 40aa sends page information to the cloud service 16cs (step S602). When the cloud service 16cs receives the page information from the external input apparatus 40aa, the cloud service 16cs sends the shared literature data corresponding to the received page information (step S603).

Processes in steps S604 through S608 after that are the same as processes in steps S508 through S512, and the explanations thereof will be omitted.

As described above, according to the third embodiment, without considering timing of uploading the shared literature data as described in the second embodiment, it is possible to conduct the screen sharing. Moreover, it is possible for the PC terminal 20 to download the shared literature data which the external input apparatus 40aa displays, without considering the timing of the upload.

As described above, in the transmission system 1 according to the third embodiment, the address information of the shared literature data for which the screen sharing is performed among the transmission terminals 10 is displayed at a screen. Hence, it is possible to download the shared literature data based on the address information being displayed. By this configuration, even in a case of forgetting distributing of the shared literature data beforehand, a case in which the shared literature data are required to be additionally distributed since the number of the participants increases at the last moment, and the like, it is possible to easily acquire the shared literature data.

In the first, second, and third embodiments, each of the transmission terminals 10 and the external input apparatuses 40 corresponds to an example of the information processing terminal. The destination information generation part 23 and the screen information synthesis part 24 correspond to an example of a generation part. The transmission/reception part 11 and the transmission/reception part 41 correspond to an example of a transmission part.

Accordingly, it is possible to improve accessibility with respect to data pertinent to a shared screen.

The present invention can be implemented in any convenient form, for example using dedicated hardware, or a mixture of dedicated hardware and software. The present invention may be implemented as computer software implemented by one or more networked processing apparatuses. The network can comprise any conventional terrestrial or wireless communications network, such as the Internet. The processing apparatuses can comprise any suitably programmed apparatuses such as a general purpose computer, personal digital assistant, mobile telephone (such as a WAP or 3G-compliant phone) and so on. Since the present invention can be implemented as software, each and every aspect of the present invention thus encompasses computer software implementable on a programmable device.

The computer software can be provided to the programmable device using any storage medium for storing processor readable code such as a floppy disk, a hard disk, a CD ROM, a magnetic tape device or a solid state memory device.

The hardware platform includes any desired kind of hardware resources including, for example, a processor such as a central processing unit (CPU), a random access memory (RAM), and a hard disk drive (HDD). The CPU may be implemented by any desired kind of any desired number of processors. The RAM may be implemented by any desired kind of volatile or non-volatile memory. The HDD may be implemented by any desired kind of non-volatile memory capable of storing a large amount of data. The hardware resources may additionally include an input device, an output device, or a network device, depending on the type of the apparatus. Alternatively, the HDD may be provided outside of the apparatus as long as the HDD is accessible. In this example, the CPU, such as a cache memory of the CPU, and the RAM may function as a physical memory or a primary memory of the apparatus, while the HDD may function as a secondary memory of the apparatus.

## Claims

1. An information processing terminal, comprising:
a generation part (24) configured to generate image data indicating a first image where address information of predetermined data is embedded in a second image being displayed at a display device; and
a transmission part (11) configured to transmit the image data generated by the generation part (24) to have a destination for sharing the second image be a share of the image data.

2. The information processing terminal as claimed in claim 1, further comprising an acquisition part configured to acquire the address information of the predetermined data which are associated with identification information of the information processing terminal and are stored in a storage part,
wherein the generation part (24) generates the image data indicating the first image where the address information acquired by the acquisition part is embedded.

3. The information processing terminal as claimed in claim 1, further comprising a part configured to store the image data indicating the second image in a storage part,
wherein the generation part (24) is configured to generate the image data indicating the first image where the address information of the image data indicating the second image being stored in the storage part is embedded.

4. The information processing terminal as claimed in claim 1, wherein further comprising:
an input part configured to accept an input of the address information;
an acquisition part configured to acquire data pertinent to the address information; and
a display part configured to display the data at a display device,
wherein the generation part (24) is configured to generate the image data indicating the first image where the address information accepted by the input part is embedded in the second image displayed by the display part at a display device.

5. A transmission system including an information processing terminal and a management apparatus connected to the information processing terminal through a network, the transmission system comprising:
a storage part configured to store predetermined data;
a generation part (24) configured to generate image data indicating a first image where address information of the predetermined data is embedded in a second image being displayed at a display device; and
a transmission part (11) configured to transmit the image data generated by the generation part (24) to have a destination for sharing the second image be a share of the image data.

6. A non-transitory computer-readable recording medium storing a program which, when executed by a computer, causes the computer to perform a process comprising:
generating image data indicating a first image where address information of predetermined data is embedded in a second image being displayed at a display device; and
transmitting the image data generated in the generating to have a destination for sharing the second image be a share of the image data.
